# EUROPÄISCHE PATENTSCHRIFT

(11) **EP 1 292 423 B1**
(45) Veröffentlichungstag und Bekanntmachung des Hinweises auf die Patenterteilung: **26.08.2009**
(21) Anmeldenummer: 01940038.1
(22) Anmeldetag: 22.06.2001
(51) Int. Cl.: B23P 15/00, B21D 53/84, F16H 53/02, F01L 1/047, F16D 1/068

(54) **VERFAHREN ZUR HERSTELLUNG EINER NOCKE FÜR EINE NOCKENWELLE**
METHOD FOR PRODUCING A CAM FOR A CAMSHAFT
PROCEDE DE PRODUCTION D'UNE CAME D'UN ARBRE A CAMES

(30) Priorität: 23.06.2000 CH 124800
(43) Veröffentlichungstag der Anmeldung: 19.03.2003
(73) Patentinhaber: Merz, Karl, CH-5734 Reinach/AG (CH)
(72) Erfinder: Merz, Karl, CH-5734 Reinach/AG (CH)
(74) Vertreter: Ottow, Jens M.
(86) Internationale Anmeldenummer: PCT/CH2001/000390
(87) Internationale Veröffentlichungsnummer: WO 2001/098020

(56) Entgegenhaltungen:
- EP-A- 0 509 239
- WO-A-01/79661
- WO-A-96/27076
- DE-A- 3 431 361
- DE-A- 4 324 836
- DE-A- 4 437 399
- DE-A- 19 740 323
- GB-A- 275 842
- GB-A- 1 117 816
- US-A- 4 620 356
- US-A- 4 798 178
- PATENT ABSTRACTS OF JAPAN vol. 015, no. 457 (M-1181), 20. November 1991 (1991-11-20) & JP 03 194105 A (MAZDA MOTOR CORP), 23. August 1991 (1991-08-23)
- PATENT ABSTRACTS OF JAPAN vol. 1998, no. 03, 27. Februar 1998 (1998-02-27) & JP 09 303639 A (CALSONIC CORP), 28. November 1997 (1997-11-28)
- PATENT ABSTRACTS OF JAPAN vol. 008, no. 170 (M-315), 7. August 1984 (1984-08-07) & JP 59 064187 A (HITACHI SEISAKUSHO KK), 12. April 1984 (1984-04-12)

## Beschreibung

### TECHNISCHES GEBIET

Die vorliegende Erfindung betrifft ein Verfahren zur Herstellung einer Nocke für eine Nockenwelle, wie sie z.B. Anwendung findet in Verbrennungsmotoren für Automobile, mit einer zylindrischen Welle und mit mehreren darauf fixierten Nocken.

Derartige, aus mehren Einzelteilen zusammengefügte Nockenwellen werden in zunehmendem Masse anstelle von giess- oder schmiedetechnisch hergestellten Nockenwellen verwendet.

Die Erfindung betrifft weiter die Herstellung einer Nockenwelle unter Verwendung mindestens einer Nocke der neuen, hier nachfolgend beschriebenen Art.

### STAND DER TECHNIK

Zur Herstellung von Nocken für Nockenwellen werden üblicherweise zunächst Rohlinge durch Ablängen eines stangenförmigen Vollmaterials gewonnen. In diesen wird dann erst die Durchgangsöffnung für die Welle hergestellt. Schliesslich werden in der Durchgangsöffnung meist auch noch axial ausgerichtete Nuten ausgeräumt sowie die Mantelfläche der Nocken gehärtet.

Zur Fixierung der meist mehreren Nocken auf der Welle sind im Stand der Technik verschiedene Verfahren bekannt:

Bei einem ersten solchen Verfahren wird die Welle im Bereich der Nocken mit einem aufgerollten, über den Wellendurchmesser überstehenden Nullsteigungsgewinde versehen.

Beim Aufpressen der Nocken auf die Welle entsteht ein Formkraftschluss zwischen diesem Gewinde und den erwähnten Axialnuten der Nocken, indem sich die beiden Kontouren ineinander verkrallen. Das Verfahren hat jedoch verschiedene Nachteile:
- Beim Rollieren verlängern und verbiegen sich die Wellen nicht unerheblich. Jede Welle muss deshalb anschliessend auf ihr Sollmass gekürzt und die Verbiegung durch Richten wieder beseitigt werden. Die Lagerstellen der Wellen können erst nach dem Aufpressen der Nocken auf Endmass geschliffen werden. Die auftretenden Toleranzen müssen durch ein Übermass von mindestens 0,5 mm berücksichtigt werden.
- Die Nocken deformieren sich beim Aufpressen, wobei dieses sogenannte Nockenwachstum variiert und nicht gut kontrollierbar ist. Dies bedingt auch eine Nachbearbeitung jeder einzelnen Nocke durch Schleifen. Hierbei kommt es je nach Deformation der Nocke zu einem über ihren Umfang ungleichmässigen Materialabtrag. Eine zuvor induktiv erzeugte Oberflächen-Härtezone einheitlicher Dicke wird dadurch ungleichmässig dick. Da eine Mindestdicke für diese Härtezone meist vorgeschrieben ist, muss auch sie von vornherein überdimensioniert werden.
- Beim Aufpressen der Nocken kann es vorkommen, dass diese etwas verkippen, weil die erwähnten Rillensysteme einen geraden Sitz der Nocken auf der Welle nicht erzwingen. Die Nocken taumeln dann etwas. Hinzu kommt, dass die in Aufpressrichtung vordere Kante ihrer Öffnung stets mit einer Fase versehen ist, was die für die Ausrichtung und den Sitz der Nocken wichtige axiale Länge der Nocken etwas verkürzt. Auch diese Toleranzen müssen durch eine ausreichendes Übermass berücksichtigt und nachfolgend durch Schleifen wieder beseitigt werden.
- Bei dem gewaltsamen Aufpressen der Nocken besteht die Gefahr der Rissbildung in den Nocken, was sich als Ausschussquelle auswirkt.
- Die Herstellung ist durch die vielen notwendigen Bearbeitungsschritte und den erheblichen Grad an Nachbearbeitung nach dem Aufpressen der Nocken recht zeitintensiv.

Bei einem anderen Verfahren wird zwischen den Nocken und der Welle ein Schrumpfsitz erzeugt. Hierbei wird die Öffnung der Nocken im Durchmesser etwas geringer gewählt als der Aussendurchmesser der Welle. Die Nocken werden dann in erwärmtem Zustand auf die tiefgekühlte Welle aufgeschoben. Nach Temperaturausgleich der Teile ergibt sich der gewünschte Schrumpfsitz. Dieser ist allerdings meist nicht ausreichend fest, um den z.B. in einem Automotor an den Nocken auftretenden Drehmomenten standzuhalten. Eine Verzahnung, ähnlich wie bei den vorbeschriebenen Verfahren, ist deshalb meist zusätzlich erforderlich.

Bei einem weiteren Verfahren wird die als Rohr ausgebildete Welle nach dem Aufschieben der Nocken mit einem Innenhochdruck beaufschlagt, wodurch sie sich ausdehnt und es dadurch ebenfalls zu einem Pressitz der Nocken auf der Welle kommt. Da sich die Welle im Bereich zwischen den Nocken sogar über den Innendurchmesser der Nocken hinaus ausdehnt, müssen zumindest auch hier die in diesen Zonen angeordneten Lagerstellen durch Schleifen erheblich nachbearbeitet werden.

WO 96/27076 A offenbart ein Verfahren zur Herstellung einer Nocke für eine Nockenwelle, welche eine zylindrische Welle und mehrere darauf fixierte Nocken umfasst, bei welchem Verfahren die Nocke aus einem länglichen Profilstreifen durch Zusammenbiegen seiner Enden hergestellt wird.

Aus GB 275 842 A ist bei einem Verfahren zur Herstellung einer Nockenwelle bekannt, die Nocken schweisstechnisch auf einer Welle zu fixieren.

### DARSTELLUNG DER ERFINDUNG

Die vorliegende Erfindung stellt sich zunächst die Aufgabe, ein Verfahren zur Herstellung einer Nocke der eingangs genannten Art anzugeben, durch welches Nocken für Nockenwellen bei ausreichender Festigkeit insbesondere schneller und kostengünstiger herstellbar sind. Erfindungsgemäss gelöst wird diese Aufgabe durch eine Nocke, wie sie im Patentanspruch 1 definiert ist und bei welcher die Nocke aus mehreren Profilstreifenstücken durch Biegen und durch Zusammensetzen dieser Stücke in Umfangsrichtung hergestellt wird.

Die Erfindung stellt sich weiter die Aufgabe, ein Verfahren zur Herstellung einer Nockenwelle unter Verwendung mindestens einer solchen Nocke anzugeben, welches ebenfalls rationell und schneller ausführbar ist, bei welchem Nachbearbeitungsschritte im wesentlichen entfallen können und und welches dadurch insgesamt wirtschaftlicher ist. Diese Aufgabe wird gemäss Patentanspruch 14 dadurch gelöst, dass die Nocke schweisstechnisch auf der Welle fixiert wird.

Vorteilhafte und deshalb bevorzugte Ausgestaltungen und Weiterbildungen der Erfindungsgegenstände sind jeweils in den abhängigen Ansprüchen angegeben.

Die mit der Erfindung erreichten Vorteile sind vor allem in folgendem zu sehen:

Die Herstellung der Nocken ist denkbar einfach, rationell, schnell und wirtschaftlich und kann voll automatisiert ausgehend von einem oder auch mehreren einfachen, ggf. etwas vorgeformten sowie vorzugsweise von einem Endlosmaterial abgelängten Profilstreifenstücken ausgeführt werden.

Werden die Nocken gemäss dem erfindungsgemässen Verfahren schweisstechnisch, insbesondere durch Widerstands-, Laser- oder Elektronenstrahl-Schweissen auf der Welle fixiert, entfällt ein Rollieren der Wellen und tritt somit auch kein Längenwachstum der Wellen und keine dadurch verursachte Verbiegung auf. Auch erfahren die Nocken beim Aufbringen und Aufschweissen auf die Wellen kein Nockenwachstum, so dass sowohl die Wellen als auch die Nocken vor dem Zusammenfügen bereits auf ihr jeweiliges Endmass oder wenigstens annähernd bis auf nur wenige hundertstel Millimeter (near endshape) auf ihr Endmass bearbeitet werden können. Ein aufwendiges Nachbearbeiten durch Schleifen entfällt oder wird auf ein Mindestmass reduziert. Hierdurch müssen die Wellen und die Nocken vor ihrer Verbindung zumindest nicht wesentlich überdimensioniert werden. Indem auch ein ungleiches Abtragen von Oberflächenhärtezonen vermieden wird, müssen auch diese zumindest nicht wesentlich überdimensioniert werden.

Die sich ergebenden Nockenwellen sind, verglichen mit den vorbekannten, in kürzerer Zeit unter Anwendung von weniger Arbeitsvorgängen, insbesondere mit weniger Nachbearbeitung, mit hoher Genauigkeit und mit wenig Ausschuss äusserst rationell und kostengünstig herstellbar.

Es besteht grosse Freiheit in der Wahl der Materialien für die Wellen einerseits und die Nocken andererseits sowie höchstmögliche Bauartenflexibilität.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: jeweils in einer Seitenansicht unter a) eine aus einem gebogenen Profilstreifen hergestellte nicht erfindungsgemässe Nocke auf einer Welle, wobei die Welle quer angeschnitten ist und unter b) den noch geraden Profilstreifen vor dem Zusammenbiegen;
- Fig. 2: schematisch ein Biegewerkzeug mit einer darin enthaltende nicht erfindungsgemässen Nocke;
- Fig. 3: eine Widerstands-Schweissanordnung zum Fixieren von Nocken auf einer Welle;
- Fig. 4: unter a) in einer Seitenansicht eine nicht erfindungsgemässe Nocke mit innenseitig angebrachten Rippen, unter b) in Aufsicht einen noch geraden Profilstreifen mit wenigstens teilweise bereits angebrachten Rippen und unter c) in einer Ausschnittsvergrösserung einen Umfangsabschnitt einerseits der Welle als auch der Nocke mit mehreren, mit dem Widerstands-Schweissverfahren herstellbaren Schweissnähten;
- Fig. 5: im Schnitt eine mit einer Fussleiste versehene Nocke auf einer Welle, wobei die Nocke entlang der Fussleiste mit einem Laser- oder Elektronenstrahl mit der Welle verschweisst ist;
- Fig. 6: schematisch in Ansicht eine Anordnung zur Herstellung einer Nockenwelle mit einer Vielzahl von Laser-oder Elektronenstrahl-Schweissköpfen;
- Fig.7: unter a) - c) drei verschiedene nicht erfindungsgemässe Nocken zusammen mit den jeweils zugehörigen, noch nicht gebogenen Profilstreifen;
- Fig. 8: eine weitere nicht erfindungsgemässe Nocke mit überlappenden Enden; und
- Fig. 9: unter a) - c) die Schritte zur Herstellung einer aus zwei gebogenen Profilstreifenstücken zusammengesetzten Nocke nach der Erfindung.

### WEGE ZUR AUSFÜHRUNG DER ERFINDUNG

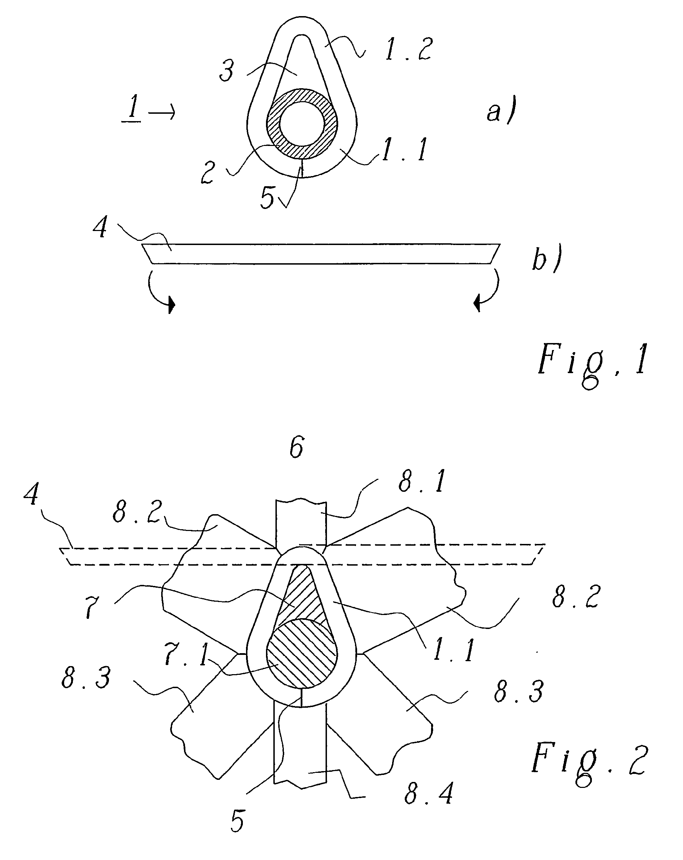

In Fig. 1 ist unter a) mit 1 eine nicht erfindungsgemässe Nocke bezeichnet, die auf einer hohlzylindrischen Welle 2 befestigt ist. Die nicht erfindungsgemässe Nocke 1 weist einen ersten Abschnitt 1.1 auf, entlang von welchem sie in Anlage an der Welle 2 ist und diese teilweise umschliesst und einen zweiten Abschnitt 1.2, der von der Welle absteht und einen Hohlraum 3 umschliesst. Der Hohlraum 3 hat den Vorteil, dass er die nicht erfindungsgemässe Nocke 1 leichter macht und ihr Trägheitsmoment reduziert. Dadurch verringert sich auch das Gewicht der gesamten Nockenwelle sowie ihr Drehwiderstand.

Die nicht erfindungsgemässe Nocke 1 ist aus einem Profilstreifen durch Zusammenbiegen seiner Enden hergestellt. Einen solchen Profilstreifen 4 zeigt Fig. 1 unter b), wobei der Profilstreifen 4 hier noch gerade und ungebogen ist. Die Biegerichtung des Profilstreifens 4 ist mit Pfeilen angegeben.

Vorzugsweise wird der Profilstreifen 4 so gebogen, dass seine Enden nach dem Biegen einen stumpfen Stoss 5 bilden und seine Endflächen flächig aneinanderstossen. Hierzu kann es vorteilhaft sein, die Enden vor dem Biegen abzuschrägen, wie dies in Fig. 1 b) ebenfalls dargestellt ist.

Vorzugsweise wird der Profilstreifen 4 von einem Endlosmaterial abgelängt. Die Dicke des Profilstreifens 4 beträgt vorzugsweise zwischen 5 - 15 mm. Er könnte über seine Länge eine einheitliche, aber auch eine variable Dicke aufweisen, so dass z.B. der Abschnitt 1.1 der nicht erfindungsgemässen Nocke 1 dicker als ihr Abschnitt 1.2 ist, oder umgekehrt.

Fig. 2 zeigt eine nicht erfindungsgemässe Nocke 1 in einem Biegewerkzeug 6, wie es mit Vorteil für ihre Herstellung einsetzbar ist. Der Profilstreifen 4 wird hierbei mit mehreren Biegefingern 8.1 - 8.4 fliesspresstechnisch in mehreren Schritten über einen Biegekern 7 in seine gewünschte Endform gebogen. Mit dem ersten Biegefinger 8.1 wird dabei der noch ungebogene Profilstreifen 4 zunächst oben auf dem Biegekern 7 fixiert. Sodann biegen die zweiten Biegefinger 8.2 den Profilstreifen 4 in eine etwa V-förmige Vorform. Mit den dritten Biegefingern 8.3 wird der Profilstreifen 4 unten um den Biegekern 7 herumgebogen und mit dem vierten Biegefinger 8.4 schliesslich die Enden des 4 zu dem erwähnten stumpfen Stoss 5 geschlossen.

In einem weiteren Arbeitsschritt können die beiden aneinanderstossenden Enden dann noch miteinander, insbesondere unter Einsatz von Widerstands-, Laser- oder Elektronenschweisstechnik, verschweisst werden.

Die so hergestellte nicht erfindungsgemässe Nocke 1 wird bevorzugt auch schweisstechnisch auf der Welle befestigt, insbesondere wieder unter Einsatz von Laser- oder Elektronenschweisstechnik, mit besonderem Vorteil aber durch Widerstands-Schweissen.

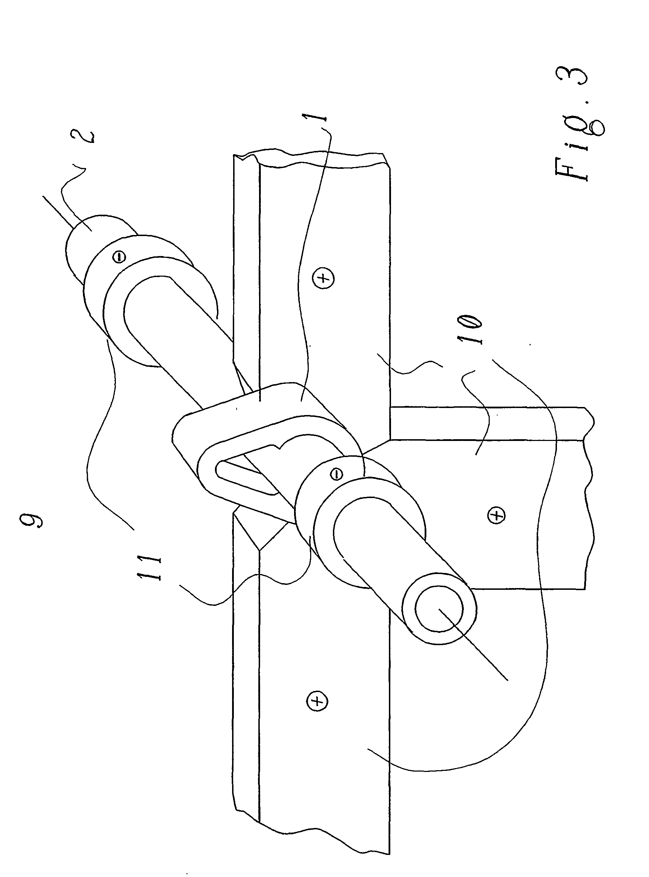

Fig. 3 zeigt eine Widerstands-Schweissanordnung 9, bei welcher eine auf eine Welle 2 aufgeschobene Nocke 1 durch drei Schweisszangen/Elektroden 10 in ihrer gewünschten Position und Drehstellung festgehalten wird. Zwei auf die Welle 2 aufgeklemmte Ringe 11 bilden die Gegenelektroden. Im Strompfad zwischen den Elektroden bilden die Berührungsflächen zwischen der Nocke 1 und der Welle 2 die Bereiche mit dem höchsten ohm'schen Widerstand. Mittels eines hohen Stromstosses lässt sich in diesen Zonen kurzfristig eine hohe Verlustleistung deponieren, die zu der gewünschten Verschweissung der genannten Berührungsflächen miteinander führt.

Gff. ist es bei diesem Schweissverfahren auch möglich, die beiden aneinanderstossenden Enden des Profilstreifens 4 direkt mit zu verschweissen, wodurch ein vorgängiges Verschweissen dieser Enden mit Vorteil entfallen würde.

Indem bei diesem Schweissverfahren die Nocke zwischen den Schweisszangen 10 eingeklemmt ist, entfällt mit Vorteil auch eine ggf. aufwendige Vorfixierung der Nocke auf der Welle.

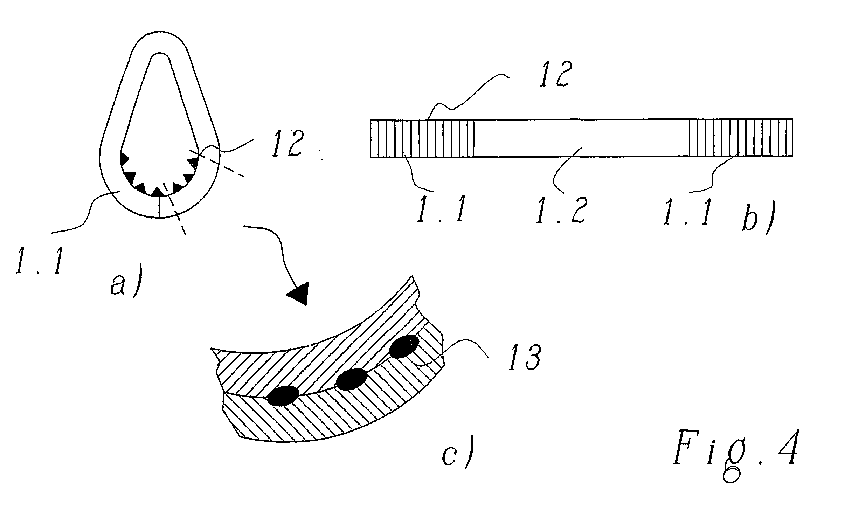

In einer bevorzugten Ausgestaltung wird die nicht erfindungsgemässe Nocke 1, wie in Fig. 4 a) dargestellt, mit nach innen vorstehenden, z.B. in axialer Richtung verlaufenden Rippen 12 an ihrem ersten Abschnitt 1.1 versehen. Die Rippen 12 können bereits an dem noch ungebogenen Profilstreifen 4 z.B. walztechnisch angebracht werden, wie in Fig. 4 b) dargestellt. Sie könnten alternativ auch erst während des Biegens auf dem Biegekern 7 erzeugt werden, wobei ein Teil des Biegekerns mit einer entsprechenden Oberflächenstruktur versehen sein müsste. Die beiden Möglichkeiten könnten auch miteinander kombiniert angewendet werden. Die Rippen sollten z.B. eine Höhe von 0.15-0.16 mm und einen Abstand von 1.5-2mm aufweisen.

Durch das Vorhandensein der Rippen 12 ergeben sich definierte, scharfe Berührungslinien zwischen der Nocke und der Welle, was für den Stromübergang beim Widerstands-Schweissen von Vorteil ist, indem die Schweissung entlang dieser Linien stattfindet. Bei Verwendung einer Schweissvorrichtung gemäss Fig. 3 kann mit weiterem Vorteil während des Schweissens mit den Schweisszangen 10 noch Druck auf die Nocke derart ausgeübt werden, dass die Rippen 12 bzw. verquetscht werden und sich die nicht erfindungsgemässe Nocke 1 an die Welle 4 flächig anlegt. Es entsteht eine Struktur mit im Querschnitt linsenförmigen Schweissnähten 13, wie dies Fig. 4 unter c) in einer Ausschnittsvergrösserung zeigt.

Alternativ können anstatt von Rippen in Axialrichtung auch solche in Längsrichtung des Proflistreifens 4 bzw. in Umfangsrichtung der fertigen nicht erfindungsgemässen Nocke verwendet werden. Um hierbei nach dem Biegen des Profilstreifens 4 den Biegekern 7 wieder einfach entfernen zu können, ist es von Vorteil, die Rippen einerseits und die Aussenstruktur am Biegekern andererseits nach Art eines Gewindes auszubilden, um ein Herausdrehen des Biegekerns aus der Nocke zu ermöglichen. Der Biegekern 7 müsste dazu, wie dies in Fig. 2 angedeutet ist, zusätzlich zweiteilig mit einem drehbaren Teil 7.1 ausgebildet werden.

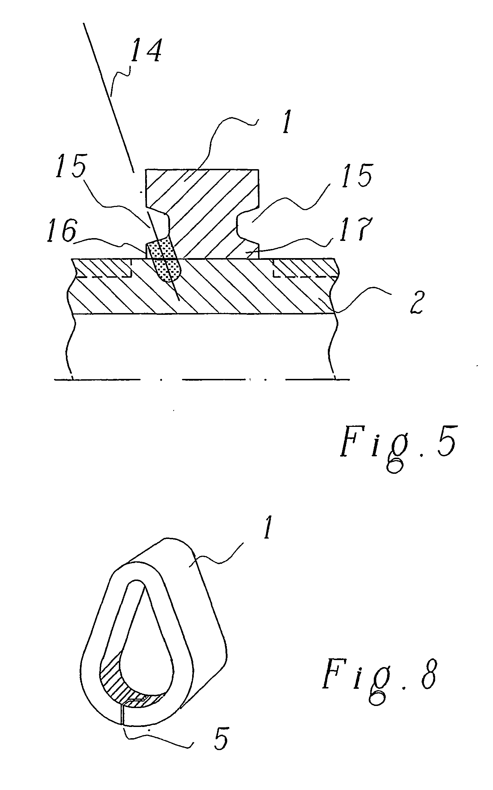

In Fig.5 ist eine Nocke 1 auf einer Welle 2 dargestellt, wobei die Nocke 1 speziell vorteilhaft für eine schweisstechnische Befestigung mit einem Laser- oder Elektronenstrahl ausgebildet ist. Die Nocke 1 weist dazu mindestens einseitig eine Fussleiste 16 auf, die durch eine Rille 15 an ihrer entsprechenden Seitenfläche ausgeformt ist. Entlang dieser Fussleiste 16 und durch diese hindurch kann die Nocke vorzugsweise über ihren Umfang vollumlaufend schräg von oben mit einem Laser- oder Elektronenstrahl 14 mit der Welle 2 verschweisst werden. Durch das Vorhandensein der Fussleiste 16 ergibt sich eine Schweissnaht (Schweisskegel) mit einem praktisch optimalen Schweissquerschnitt, dessen Breite der Breite der Fussleiste 16 etwa entspricht und dadurch eine ausserordentlich gute, hoch belastbare und dauerhafte Verbindung zwischen der Nocke 1 und der Welle 2 garantiert. Eine gleichartige Verschweissung ist natürlich auch entlang der Fussleiste 17 auf der anderen Seite der Nocke 1 vorgesehen und bevorzugt.

Die Fussleisten 16 und 17 können mit Vorteil umformtechnisch bereits an dem noch ungebogenen Profilstreifen 4 ausgebildet werden, an welchem sie einfach gerade Nuten sind.

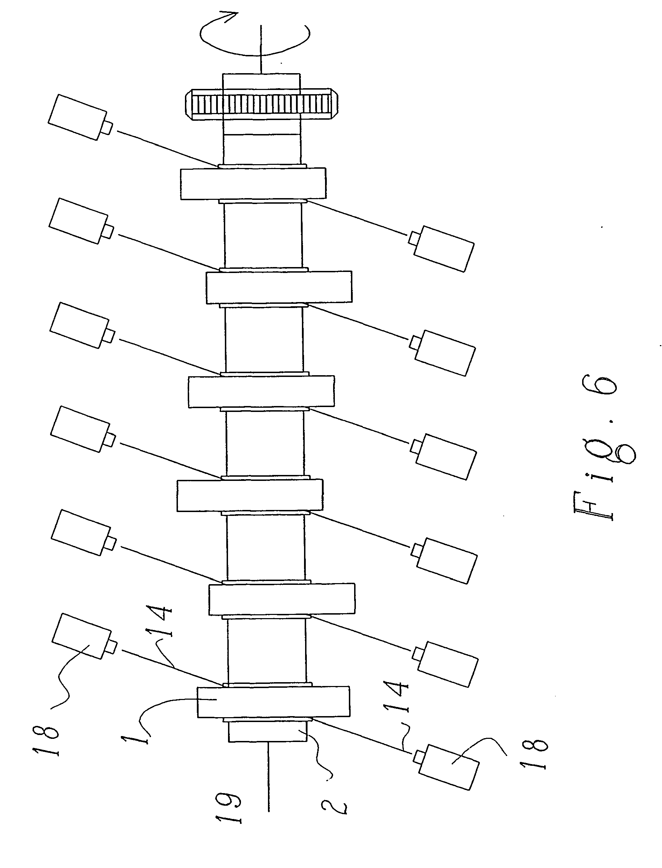

Fig. 6 zeigt eine Anordnung, wie sie mit Vorteil für das laser- oder elektronenstrahltechnische Verschweissen von Nocken 1 mit einer Welle 2 einsetzbar ist. Dargestellt ist in Fig. 6 allerdings nur schematisch eine Welle 2 mit mehreren aufgeschobenen Nocken 1 sowie pro Nocke 1 je zwei Schweissköpfe 18, welche Laser- oder Elektronenschweissköpfe sein können. Die Schweissköpfe 18 sind so ausgerichtet, dass ihre Schweissstrahlen 14 auf die Fussleisten 16 bzw. 17 der Nocken 1 auftreffen. Fig. 6 ist so zu verstehen, dass die Welle 2 durch nicht dargestellte Mittel axial eingespannt und während die Schweissköpfe 18 gleichzeitig in Betrieb gesetzt werden, um ihre Achse 19 gedreht wird. Auf diese Weise ist es möglich, in einem nur wenige Sekunden dauernden Vorgang alle Nocken 1 gleichzeitig auf der Welle 2 schweisstechnisch zu befestigen.

Vor dem Anbringen der Schweissnähte mit der Vorrichtung gemäss Fig. 6 kann es ggf. erforderlich sein, die Nocken 1 auf der Welle 2 in ihrer gewünschten Position und Drehstellung vorzufixieren. Dies kann z.B. durch schweisstechnisches Heften, aber auch durch eine oder mehrere der eingangs erläuterten Verbindungsmethoden nach dem Stand der Technik wie Schrumpfsitz, Formkraftschluss oder Innenhochdruck erfolgen. Da die Vorverbindung nicht besonders fest und schon gar nicht dauerhaft sein muss, können die eingangs geschilderten Nachteile der bekannten Befestigungsmethoden dabei vermieden werden.

Durch das Schweissen werden die Welle 4 und die Nocken 1 vergleichsweise wenig beansprucht und behalten so mit Vorteil ihre Form. Die durch das Schweissen in die Welle 2 und die Nocken 1 lokal eingetragene Wärme kann bei rohrförmiger Welle z.B. durch Durchleiten eines Kühlmediums durch die Welle zusätzlich sogar noch abgeführt werden, was die möglichen Beeinträchtigen der Teile weiter reduziert.

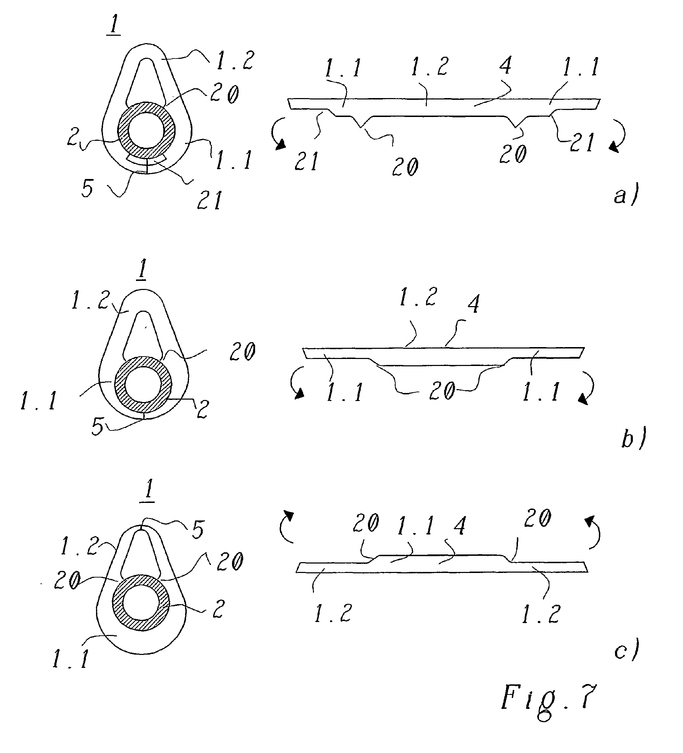

Fig.7 zeigt unter a) - c) drei weitere Ausführungsbeispiele von nicht erfindungsgemässen Nocken 1 zusammen mit ihren jeweils zugehörigen, noch nicht gebogenen Profilstreifen 4. Bei allen drei Beispielen ist im Übergangsbereich zwischen den Abschnitten 1.1 und 1.2 eine nach innen vorstehende, die Welle 2 enger umschliessende Schulter 20 ausgebildet.

Bei der unter a) gezeigten Ausführungsform ist zusätzlich im Stossbereich 5 eine Schweissnaht-Ausnehmung 21 vorgesehen, welche die beim Verschweissen der Profilstreifen-Enden allfällig entstehende Schweissraupe in sich aufnehmen kann. Dadurch ergibt sich der Vorteil, dass nach dem Schweissen eine gegen aussen hin eine glatte Oberflächenstruktur der Nocke erreicht wird und somit ein nachträgliches Schleifen der Oberfläche nach dem Schweissen entfällt.

Die unter b) dargestellte nicht erfindungsgemässe Nocke zeigt im von der Welle 2 abstehenden Längenabschnitt 1.2 eine grössere Wanddicke auf wie im Längenabschnitt 1.1, was dem Längenabschnitt 1.1 eine grössere Stabilität verleiht.

Die unter c) dargestellte nicht erfindungsgemässe Nocke weist umgekehrt im Längenabschnitt 1.2 eine dünnere Wanddicke auf als im Längenabschnitt 1.1. Zusätzlich ist hier der Stossbereich 5 der beiden Profilstreifenenden nach oben in den Bereich des Längenabschnitts 1.2 verlegt, was lediglich eine weitere Möglichkeit ist, diesen am Umfang der Nocken zu plazieren.

Bei der in Fig. 8 dargestellten Ausführungsform einer nicht erfindungsgemässen Nocke 1 sind die beiden Profilstreifenenden im Sinne einer noch weiteren Varainte überlappend ausgebildet und zwar überlappend in Axialrichtung, wobei eine Überlappung in Radialrichtung aber auch möglich wäre. Eine Überlappung in Axialrichtung hat allerdings den Vorteil, dass die beiden Enden einerseits bereits beim Zusammenbiegen des Profilstreifens in gegenseitige, ggf. elastisch leicht vorgespannte axiale Anlage aneinander gebracht werden können und dadurch sicher miteinander fluchten. Andererseits wird der Stoss 5 beim Abrollen der Nocke dann auch nicht auf einmal überfahren, so dass sich eine im Stossbereich allfällig vorhandene und aus Toleranzgründen eventuell sogar notwendige Rille auf der Aussenseite der Nocke nicht nachteilig auswirkt.

Bei der nicht erfindungsgemässen Nocke von Fig. 8 sind in ihrem zur Anlage an der Welle kommenden Abschnitt 1.1 auch noch nach innen vorstehende Rippen ausgebildet, wie sie im Zusammenhang mit dem Widerstands-Schweissen als vorteilhaft ebenfalls schon beschrieben und in Fig. 4 unter a) und b) dargestellt sind. Diese Rippen lassen sich mit Vorteil auch dazu verwenden, eine mechanische Verzahnung zwischen der Nocke und der Welle zu erzeugen. Hierzu wird die Nocke im noch offenen Zustand, d.h. mit noch nicht miteinander verschweissten Enden auf die Welle aufgebracht und dort in Position von aussen so mit Druck beaufschlagt, dass sich die Rippen in die Welle eindrücken und die genannte Verzahnung dabei entsteht. Damit das möglich ist, müssen die Rippen ggf. vorgehärtet sein. Wenn die Rippen in Axialrichtung ausgerichtet sind, ergibt sich mit Vorteil eine Drehfixierung der Nocke auf der Welle. Anschliessend kann die Nocke auf eine der vorbeschriebenen Arten mit der Welle verschweisst werden.

Wegen der Verzahnung ist eine Verschweissung der Nocke mit der Welle ggf. sogar überflüssig und es genügt, ausschliesslich die Nocke durch Verschweissen ihrer beiden Enden zu schliessen. Werden diese hierbei unter Druck, z.B. lasertechnisch aufgeschmolzen, zieht sich die Nocke beim Wiedererstarren des geschmolzenen Materials mit weiterem Vorteil noch zusätzlich zusammen und schliesst sich fest um die Welle herum, weil die Dichte von flüssigem Metall geringer ist als die Dichte von festem Metall.

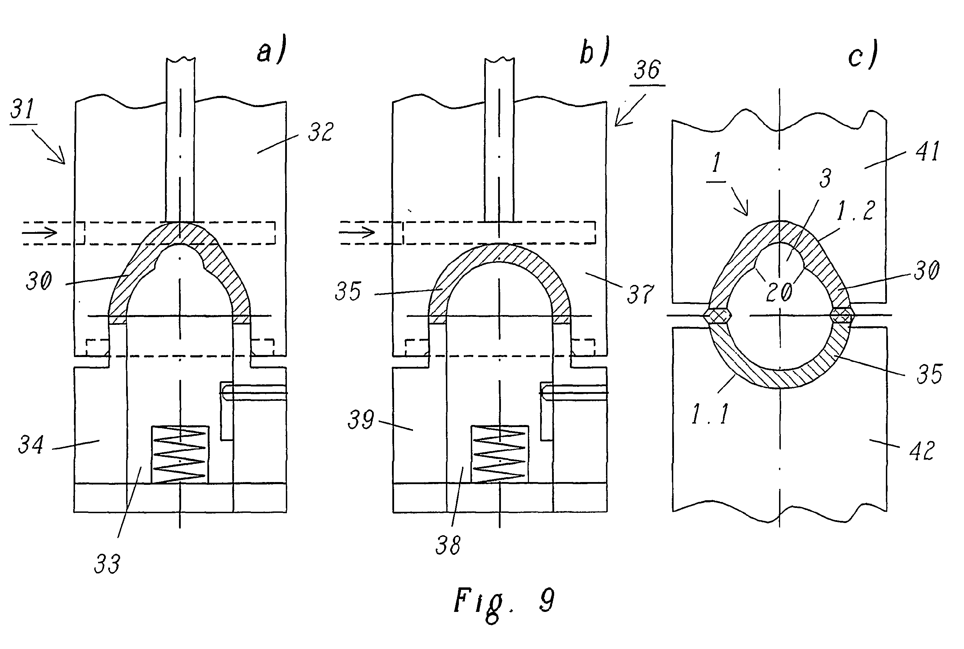

Fig. 9 zeigt unter a) - c) die Schritte zur Herstellung einer aus zwei gebogenen Profilstreifenstücken 30, 35 zusammengesetzten Nocke 1 nach der Erfindung. In Fig. 9 a) ist hierbei ein bereits fertig zu einer oberen, die Nockenerhebung bzw. Nockenspitze umfassenden Nockenhälfte gebogenes Profilstreifenstück 30 in einem Biegewerkzeug 31 dargestellt, welches einen oberen Formstempel 32, einen unteren Formstempel 33 sowie einen Präzisionsanschlag 34 umfasst. Entsprechend zeigt Fig. 9 b) einen zu dem Profilstreifenstück 30 komplementären, ebenfalls schon fertig zu einer unteren Nockenhälfte gebogenen Profilstreifenstück 35 in einem Biegewerkzeug 36, dessen oberer Formstempel mit 37, unterer Formstempel mit 38 und dessen Präzisionsanschlag mit 39 bezeichnet sind. In Fig. 9c) sind die beiden halbkreis- oder halbschalenförmigen Nockenhälften zwischen zwei Schweisselektroden 41 und 42 zu einem geschlossenen Ring zusammengesetzt und mittels dieser Elektroden widerstandschweisstechnisch auch schon an ihren gegenseitigen Berührungsflächen miteinander verbunden.

Von ihrer Querschnittsform her entspricht die Nocke von Fig. 9 c) etwa der von Fig. 7 a), d.h. sie weist im Übergangsbereich zwischen ihrem Längenabschnitt 1.1, mit dem sie zur Anlage an der Welle kommt, und ihrem Längenabschnitt 1.2, in welchem sie von der Welle absteht, jeweils eine Schulter 20 auf. Die Ausprägung dieser Schultern 20 kann vor dem Biegen an dem noch geraden Profilstreifenstück 30 erfolgen, mit Vorteil aber auch erst im Biegewerkzeug 31 beim Biegen. Alle anderen vorbeschriebenen Nockenformen und -ausbildungen sind aus mehreren Profilstreifenstücken natürlich ebenfalls herstellbar, wobei die Nocken nicht notwendig aus einer oberen und einer unteren Hälfte zusammengesetzt werden müssen. Insbesondere könnten sie auch aus zwei gleichen linken und rechten Hälften zusammengesetzt werden, wodurch dann sogar ein Biegewerkzeug entfallen würde. Weiter möglich wäre die Herstellung von Vollnocken, d.h. von solchen Nocken, die die Welle allseitig umschiessen und keinen Hohlraum 3 (Fig. 1) aufweisen. Ein Aufbau der Nocken aus mehr als zwei Teilen wäre grundsätzlich ebenfalls denkbar.

Das beschriebene Verfahren weist gegenüber den vorbeschriebenen den Vorteil auf, dass die beiden Profilstreifenstücke 30 und 35 jeweils für sich nicht so stark gebogen werden müssen und von daher das Material bei der Nockenherstellung geringeren Belastung ausgesetzt wird. Auch werden zumindest die Biegewerkzeuge von ihrer Ausbildung her einfacher.

### BEZEICHNUNGSLISTE

- 1: Nocke
- 1.1: erster Längenabschnitt
- 1.2: zweiter Längenabschnitt
- 2: Welle
- 3: Hohlraum
- 4: Profilstreifen
- 5: Stoss
- 6: Biegewerkzeug
- 7: Biegekern
- 7.1: drehbarer Teil des Biegekerns
- 8.1: erste Biegefinger
- 8.2: zweite Biegefinger
- 8.3: dritte Biegefinger
- 8.4: vierter Biegefinger
- 9: Widerstands-Schweissanordnung
- 10: Schweisselektroden
- 11: Gegenelektroden
- 12: Rippen
- 13: Schweissnähte
- 14: Laser- oder Elektronenschweissstrahl
- 15: Rillen
- 16: Fussleiste
- 17: Fussleiste
- 18: Schweissköpfe
- 19: Achse
- 20: Schulter
- 21: Schweissnaht-Ausnehmung
- 30: Profilstreifenstück
- 31: Biegewerkzeug
- 32: oberer Formstempel
- 33: unterer Formstempel
- 34: Präzisionsanschlag
- 35: Profilstreifenstück
- 36: Biegewerkzeug
- 37: oberer Formstempel
- 38: unterer Formstempel
- 39: Präzisionsanschlag
- 41: Schweisselektrode
- 42: Schweisselektrode

## Patentansprüche

1. Verfahren zur Herstellung einer Nocke (1) für eine Nockenwelle, welche eine zylindrische Welle (2) und mehrere darauf fixierte Nocken (1) umfasst, **dadurch gekennzeichnet, dass** die Nocke (1) aus mehreren Profilstreifenstücken (30, 35) durch Biegen und durch Zusammensetzen dieser Stücke in Umfangsrichtung hergestellt wird.

2. Verfahren nach Anspruch 1, **dadurch gekennzeichnet, dass** die Profilstreifenstücke (30, 35) so gebogen werden, dass sie mit mindestens einem ersten Längenabschnitt (1.1) zur Anlage an der Welle (2) kommen und mit mindestens einem zweiten Längenabschnitt (1.2) von der Welle (2) abstehen.

3. Verfahren nach Anspruch 1 oder 2, **dadurch gekennzeichnet, dass** die Profilstreifenstücke (30, 35) so gebogen werden, dass ihre Enden flächig auf- oder überlappend aneinanderstossen und dass die Enden vor dem Zusammenbiegen dazu vorzugsweise geeignet geformt werden.

4. Verfahren nach einem der Ansprüche 1 - 3, **dadurch gekennzeichnet, dass** der erste Längenabschnitt (1.2) der Profilstreifenstücke (30, 35) auf seiner zur Anlage an der Welle kommenden Innenseite mit ggf. gehärteten Rippen (12) versehen wird.

5. Verfahren nach Anspruch 4, **dadurch gekennzeichnet, dass** die Rippen (12) so ausgebildet werden, dass sie im zusammengebogenen Zustand in Axialrichtung verlaufen oder ein Gewinde bilden.

6. Verfahren nach einem der Ansprüche 1 - 5, **dadurch gekennzeichnet, dass** im Übergangsbereich zwischen dem mindestens einen ersten (1.1) und dem mindestens einen zweiten Längenabschnitt (1.2) eine im zusammengebogenen Zustand nach innen vorstehende Schulter (20) ausgebildet wird.

7. Verfahren nach einem der Ansprüche 1 - 6, **dadurch gekennzeichnet, dass** die Nocke (1) im Stossbereich der Enden der Profilstreifenstücke (30, 35) mit einer Schweissnaht-Ausnehmung (21) versehen wird.

8. Verfahren nach einem der Ansprüche 1 - 7, **dadurch gekennzeichnet, dass** die Profilstreifenstücke (30, 35) zumindest entlang ihres ersten Längenabschnitts (1.1) seitlich mit einer Fussleiste (16, 17) versehen werden.

9. Verfahren nach einem der Ansprüche 4 - 8, **dadurch gekennzeichnet, dass** die Rippen (12) und/oder die Schulter (20) und/oder die Schweissnaht-Ausnehmung (21), und/oder die Fussleiste (16, 17) vor dem Biegen der Profilstreifenstücke (30, 35) wenigstens teilweise walztechnisch erzeugt werden.

10. Verfahren nach einem der Ansprüche 1 - 9, **dadurch gekennzeichnet, dass** die Profilstreifenstücke (30, 35) über einen Biegekern (33, 38) gebogen werden.

11. Verfahren nach einem der Ansprüche 4 - 9 und 10, **dadurch gekennzeichnet, dass** die Rippen (12) und/oder die Schulter (20) und/oder die Schweissnaht-Ausnehmung (21) und/oder die Fussleiste (16, 17) beim Biegen der Profilstreifenstücke (30, 35) wenigstens teilweise erzeugt werden.

12. Verfahren nach einem der Ansprüche 1 - 11, **dadurch gekennzeichnet, dass** die Enden der Profilstreifenstücke (30, 35) schweisstechnisch, insbesondere laserschweisstechnisch oder widerstands-schweisstechnisch, miteinander verbunden werden.

13. Verfahren nach den Ansprüchen 11 und 12, **dadurch gekennzeichnet, dass** das Verschweissen der Enden der Profilstreifenstücke (30, 35) so ausgeführt wird, dass die Schweissnaht-Ausnehmung (21) die allfällig dabei entstehende Schweissraupe in sich aufnimmt.

14. Verfahren zur Herstellung einer Nockenwelle unter Verwendung mindestens einer Nocke (1) gemäss einem der Ansprüche 1 - 13, **dadurch gekennzeichnet, dass** die Nocke (1) schweisstechnisch auf einer Welle (2) fixiert wird.

15. Verfahren nach Anspruch 14, **dadurch gekennzeichnet, dass** die Schweissung ohne Auftrag von zusätzlichem Material durch eine Laser- oder Elektronenstrahlschweissung ausgeführt wird.

16. Verfahren nach Anspruch 15 unter Verwendung einer mit einer Fussleiste (16, 17) versehenen Nocke (1) gemäss Anspruch 8, **dadurch gekennzeichnet, dass** die Nocke (1) entlang dieser Fussleiste (16, 17) und durch diese hindurch mit der Welle (2) verschweisst wird.

17. Verfahren nach einem der Ansprüche 14 - 16, **dadurch gekennzeichnet, dass** die Nocke (1) auf der Welle (2) vor dem Schweissen in ihrer gewünschten Position vorfixiert wird und zwar insbesondere durch schweisstechnisches Heften, durch thermischen Schrumpfsitz, durch Anwendung von Innenhochdruck bei rohrförmiger Welle und/oder durch einen masslichen oder formlichen, ggf. örtlich begrenzten Formkraftschluss.

18. Verfahren nach einem der Ansprüche 14 - 17, **dadurch gekennzeichnet, dass** mehrere Nocken 1) nacheinander auf die Welle (2) aufgebracht, jedoch gleichzeitig mit der Welle (2) verschweisst werden.

19. Verfahren nach Anspruch 14, **dadurch gekennzeichnet, dass** die Nocke (1) im Widerstands-Schweissverfahren mit der Welle 2) verschweisst wird, wobei die Nocke (1) vorzugsweise durch mindestens eine der Schweisselektroden (10) in ihrer gewünschten Position auf der Welle (2) gehalten.

20. Verfahren nach Anspruch 19 unter Verwendung einer auf ihrer zur Anlage an der Welle kommenden Innenseite mit Rippen (12) versehenen Nocke (1) gemäss Anspruch 4 oder 5, **dadurch gekennzeichnet, dass** während des Schweissens insbesondere durch die mindestens eine Schweisselektrode (10) derartig Druck auf die Nocke (1) ausgeübt wird, dass die Rippen (12) durch den Schweissvorgang weggeschmolzen werden.

21. Verfahren nach Anspruch 14 unter Verwendung einer auf ihrer zur Anlage an der Welle kommenden Innenseite mit Rippen (12) versehenen Nocke gemäss Anspruch 4 oder 5, **dadurch gekennzeichnet, dass** vor dem Schweissen derartig Druck auf die Nocke (1) ausgeübt wird, dass sich die Rippen (12) der Nocke (1) in die Welle (2) eindrücken und eine mechanische Verzahnung zwischen der Nocke (1) und der Welle (2) entsteht.

## Claims

1. A method for producing a cam (1) for a camshaft which comprises a cylindrical shaft (2) and a plurality of cams (1) fixed on the latter, **characterized in that** the cam (1) is produced from a plurality of profile strip pieces (30, 35) by these pieces being bent and assembled in the circumferential direction.

2. The method as claimed in claim 1, **characterized in that** the profile strip pieces (30, 35) are bent in such a way that they come to bear with at least one first length portion (1.1) on the shaft (2) and project with at least one second length portion (1.2) from the shaft (2).

3. The method as claimed in claim 1 or 2, **characterized in that** the profile strip pieces (30, 35) are bent in such a way that their ends butt one on the other over their area or butt one against the other so as to overlap, and **in that**, for this purpose, the ends, before being bent together, are preferably suitably shaped.

4. The method as claimed in one of claims 1-3, **characterized in that** the first length portion (1.2) of the profile strip pieces (30, 35) is provided, on its inside coming to bear on the shaft, with, if appropriate, hardened ribs (12).

5. The method as claimed in claim 4, **characterized in that** the ribs (12) are designed in such a way that, in the bent-together state, they run in the axial direction or form a thread.

6. The method as claimed in one of claims 1-5, **characterized in that** a shoulder (20) projecting inward in the bent-together state is formed in the transitional region between the at least one first length portion (1.1) and the at least one second length portion (1.2).

7. The method as claimed in one of claims 1-6, **characterized in that** the cam (1) is provided in the joint region of the ends of the profile strip pieces (30, 35) with a weld-seam recess (21).

8. The method as claimed in one of claims 1-7, **characterized in that** the profile strip pieces (30, 35) are provided laterally, at least along their first length portion (1.1), with a foot strip (16, 17).

9. The method as claimed in one of claims 4-8, **characterized in that** the ribs (12) and/or the shoulder (20) and/or the weld-seam recess (21) and/or the foot strip (16, 17) are produced at least partially by rolling before the bending of the profile strip pieces (30, 35).

10. The method as claimed in one of claims 1-9, **characterized in that** the profile strip pieces (30, 35) are bent by a bending core (33, 38).

11. The method as claimed in one of claims 4-9 and 10, **characterized in that** the ribs (12) and/or the shoulder (20) and/or the weld-seam recess (21) and/or the foot strip (16, 17) are produced at least partially during the bending of the profile strip pieces (30, 35).

12. The method as claimed in one of claims 1-12, **characterized in that** the ends of the profile strip pieces (30, 35) are connected to one another by welding, in particular laser welding or resistance welding.

13. The method as claimed in claims 11 and 12, **characterized in that** the welding of the ends of the profile strip pieces (30, 35) is carried out in such a way that the weld-seam recess (21) receives within it the welding bead which may possibly occur at the same time.

14. The method for producing a cam shaft, using at least one cam (1), as claimed in one of claims 1-13, **characterized in that** the cam (1) is fixed on a shaft (2) by welding.

15. The method as claimed in claim 14, **characterized in that** welding is carried out, without the application of additional material, by laser or electron-beam welding.

16. The method as claimed in claim 15, using a cam (1) provided with a foot strip (16, 17), as claimed in claim 8, **characterized in that** the cam (1) is welded to the shaft (2) along this foot strip (16, 17) and through the latter.

17. The method as claimed in one of claims 14-16, **characterized in that** the cam (1) is prefixed in its desired position on the shaft (2) before welding, specifically, in particular, by tacking by welding, by a thermal shrink fit, by the application of internal high pressure in the case of a tubular shaft and/or by means of a dimensional or configural, if appropriate locally limited form-locking connection.

18. The method as claimed in one of claims 14-17, **characterized in that** a plurality of cams (1) are applied to the shaft (2) in succession, but are welded to the shaft (2) simultaneously.

19. The method as claimed in claim 14, **characterized in that** the cam (1) is welded to the shaft (2) by the resistance welding method, the cam (1) being held in its desired position on the shaft (2) preferably by means of at least one of the welding electrodes (10).

20. The method as claimed in claim 19, using a cam (1) provided with ribs (12) on its inside coming to bear on the shaft, as claimed in claim 4 or 5, **characterized in that**, during welding, pressure is exerted on the cam (1), in particular, by the at least one welding electrode (10), in such a way that the ribs (12) are fused away as a result of the welding operation.

21. The method as claimed in claim 14, using a cam provided with ribs (12) on its inside coming to bear on the shaft, as claimed in claim 4 or 5, **characterized in that**, before welding, pressure is exerted on the cam (1) in such a way that the ribs (12) of the cam (1) are pressed into the shaft (2) and mechanical intermeshing between the cam (1) and the shaft (2) occurs.

## Revendications

1. Procédé de fabrication d'une came (1) d'un arbre à cames, qui comprend un arbre cylindrique (2) et plusieurs cames (1) fixées sur celui-ci, **caractérisé en ce que** la came (1) est fabriquée à partir de plusieurs éléments en bandes profilées (30, 35) par cintrage et assemblage de ces éléments dans la direction périphérique.

2. Procédé selon la revendication 1, **caractérisé en ce que** les éléments en bandes profilées (30, 35) sont cintrés de telle sorte qu'ils viennent en appui contre l'arbre (2) avec au moins une première portion longitudinale (1.1), et font saillie depuis l'arbre (2) avec au moins une deuxième portion longitudinale (1.2).

3. Procédé selon la revendication 1 ou 2, **caractérisé en ce que** les éléments en bandes profilées (30, 35) sont cintrés de telle sorte que leurs extrémités soient en aboutement à plat ou avec chevauchement les unes avec les autres, et que les extrémités soient à cet effet formées de préférence de manière appropriée avant le cintrage en commun.

4. Procédé selon l'une quelconque des revendications 1 à 3, **caractérisé en ce que** la première portion longitudinale (1.1) des éléments en bandes profilées (30, 35) est pourvue, sur son côté intérieur venant en appui contre l'arbre, de nervures éventuellement trempées (12).

5. Procédé selon la revendication 4, **caractérisé en ce que** les nervures (12) sont réalisées de telle sorte qu'elles s'étendent dans l'état cintré en commun dans la direction axiale ou qu'elles forment un filetage.

6. Procédé selon l'une quelconque des revendications 1 à 5, **caractérisé en ce que** dans la région de transition entre l'au moins une première portion longitudinale (1.1) et l'au moins une deuxième portion longitudinale (1.2) est réalisé un épaulement (20) saillant vers l'intérieur dans l'état cintré en commun.

7. Procédé selon l'une quelconque des revendications 1 à 6, **caractérisé en ce que** les cames (1) dans la région d'aboutement des extrémités des éléments en bandes profilées (30, 35) sont pourvues d'un évidement pour joint de soudure (21).

8. Procédé selon l'une quelconque des revendications 1 à 7, **caractérisé en ce que** les éléments en bandes profilées (30, 35) sont pourvus latéralement, au moins le long de leur première portion longitudinale (1.1), d'une bande de base (16, 17).

9. Procédé selon l'une quelconque des revendications 4 à 8, **caractérisé en ce que** les nervures (12) et/ou l'épaulement (20) et/ou l'évidement pour joint de soudure (21) et/ou la bande de base (16, 17) sont produits au moins en partie par une technique de laminage avant le cintrage des éléments en bandes profilées (30, 35).

10. Procédé selon l'une quelconque des revendications 1 à 9, **caractérisé en ce que** les éléments en bandes profilées (30, 35) sont cintrés sur un noyau de cintrage (33, 38).

11. Procédé selon l'une quelconque des revendications 4 à 9 et 10, **caractérisé en ce que** les nervures (12) et/ou l'épaulement (20) et/ou l'évidement pour joint de soudure (21) et/ou la bande de base (16, 17) sont produits au moins en partie lors du cintrage des éléments en bandes profilées (30, 35).

12. Procédé selon l'une quelconque des revendications 1 à 11, **caractérisé en ce que** les extrémités des éléments en bandes profilées (30, 35) sont connectées les unes aux autres par une technique de soudage, notamment une technique de soudage au laser ou par résistance.

13. Procédé selon les revendications 11 et 12, **caractérisé en ce que** le soudage des extrémités des éléments en bandes profilées (30, 35) est réalisé de telle sorte que l'évidement pour joint de soudure (21) reçoive à l'intérieur le cordon de soudage éventuellement formé.

14. Procédé de fabrication d'un arbre à cames utilisant au moins une came (1) selon l'une quelconque des revendications 1 à 13, **caractérisé en ce que** la came (1) est fixée sur un arbre (2) par une technique de soudage.

15. Procédé selon la revendication 14, **caractérisé en ce que** le soudage est réalisé sans apport de matériau supplémentaire par un soudage au laser ou par faisceau d'électrons.

16. Procédé selon la revendication 15, utilisant une came (1) pourvue d'une bande de base (16, 17) selon la revendication 8, **caractérisé en ce que** la came (1) est soudée le long de cette bande de base (16, 17) et à travers celle-ci à l'arbre (2).

17. Procédé selon l'une quelconque des revendications 14 à 16, **caractérisé en ce que** la came (1) est préfixée sur l'arbre (2) avant le soudage dans sa position souhaitée et ce notamment par un agrafage par technique de soudage, par ajustement par frettage thermique, par utilisation d'une pression élevée interne dans le cas d'un arbre tubulaire et/ou par un engagement massique ou géométrique par correspondance géométrique par force, éventuellement limité localement.

18. Procédé selon l'une quelconque des revendications 14 à 17, **caractérisé en ce que** plusieurs cames (1) sont appliquées les unes après les autres sur l'arbre (2), mais sont soudées à l'arbre (2) simultanément.

19. Procédé selon la revendication 14, **caractérisé en ce que** la came (1) est soudée dans un procédé de soudage par résistance à l'arbre (2), la came (1) étant de préférence maintenue dans sa position souhaitée sur l'arbre (2) par au moins l'une des électrodes de soudage (10).

20. Procédé selon la revendication 19, utilisant une came (1) pourvue de nervures (12) sur son côté intérieur venant en appui contre l'arbre, selon la revendication 4 ou 5, **caractérisé en ce que** pendant le soudage, une pression est exercée sur la came (1) notamment par l'au moins une électrode de soudage (10) de telle sorte que les nervures (12) soient éliminées par fusion lors de l'opération de soudage.

21. Procédé selon la revendication 14, utilisant une came pourvue de nervures (12) sur son côté intérieur venant en appui contre l'arbre, selon la revendication 4 ou 5, **caractérisé en ce qu'**avant le soudage, une pression est appliquée sur la came (1) de telle sorte que les nervures (12) de la came (1) pénètrent dans l'arbre (2) et qu'un engrènement mécanique entre la came (1) et l'arbre (2) se produise.
